# EUROPÄISCHE PATENTSCHRIFT

(11) **EP 3 515 784 B1**
(45) Veröffentlichungstag und Bekanntmachung des Hinweises auf die Patenterteilung: **15.07.2020**
(21) Anmeldenummer: 17768427.1
(22) Anmeldetag: 13.09.2017
(51) Int. Cl.: B61D 35/00

(54) **GRAUWASSERAUFBEREITUNGSVORRICHTUNG FÜR SCHIENENFAHRZEUGE**
GREY-WATER PROCESSING DEVICE FOR RAIL VEHICLES
DISPOSITIF DE TRAITEMENT D'EAUX GRISES POUR VÉHICULES FERROVIAIRES

(30) Priorität: 20.09.2016 DE 102016218002
(43) Veröffentlichungstag der Anmeldung: 31.07.2019
(73) Patentinhaber: Siemens Mobility GmbH, 81739 München (DE)
(72) Erfinder: GÄDKER, Simon, 49219 Glandorf (DE); HUGEMANN, Frank, 47829 Krefeld (DE); HÄUSSLER, Andreas, 42659 Solingen (DE); KÜBECK, Thomas, 47929 Grefrath (DE)
(86) Internationale Anmeldenummer: PCT/EP2017/072995
(87) Internationale Veröffentlichungsnummer: WO 2018/054735

(56) Entgegenhaltungen:
- EP-A1- 2 873 583
- EP-A1- 2 937 480
- DE-B3-102013 205 084

## Beschreibung

Die Erfindung betrifft eine Aufbereitungsvorrichtung für Grauwasser für ein Schienenfahrzeug, mit einem Grauwasserbehälter, einem Grauwasserzulauf in einem Einlassbereich, einem Ablauf für aufbereitetes Grauwasser in einem Auslassbereich und einem Kulissenfilter zwischen Ein- und Auslassbereich, welcher zumindest einen beweglichen Schieber aufweist, der in einer abgesenkten Position den Boden des Gauwasserbehälters berührt und in einer angehobenen Position von diesem abgehoben ist, wobei der Boden des Gauwasserbehälters vom Einlassbereich zum Auslassbereich ansteigend ist und wobei ein Reinigungsabfluss bodenseitig im Einlassbereich angeordnet ist.

Eine derartige Grauwasseraufbereitungsvorrichtung ist aus der DE 10 2013 205 084 B3 bekannt. Das Grauwasser aus einem Handwaschbecken kann nun nicht mehr nur auf das Gleis abgeleitet oder einem Abwassertank zugeführt werden, sondern es kann aufgefangen, aufbereitet und einem WC-Modul als Spülwasser zur Verfügung gestellt werden. Durch den zylindersymmetrischen Aufbau ist die Vorrichtung jedoch aufwendig herzustellen und im Betrieb zu reinigen.

Der Erfindung liegt die Aufgabe zugrunde, eine kostengünstig herzustellende und zu betreibende Aufbereitungsvorrichtung für Grauwasser vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Aufbereitungsvorrichtung für Grauwasser für ein Schienenfahrzeug umfasst einen Grauwasserbehälter mit einem Grauwasserzulauf in einem Einlassbereich des Grauwasserbehälters, einem Ablauf für aufbereitetes Grauwasser in einem Auslassbereich des Grauwasserbehälters und einem Kulissenfilter zwischen dem Ein- und dem Auslassbereich. Der Kulissenfilter weist dabei zumindest einen beweglichen Schieber auf. Der Schieber berührt mit seinem unteren Ende in einer abgesenkten Position einen Boden des Gauwasserbehälters. In einer angehobenen Position ist das untere Ende hingegen vom Boden des Grauwasserbehälters abgehoben, so dass ein Spalt zwischen dem Schieber und dem Boden frei gegeben ist. Der Boden des Gauwasserbehälters ist vom Einlassbereich zum Auslassbereich hin ansteigend ausgebildet. Somit ist der Boden des Gauwasserbehälters im Auslassbereich erhöht zum Boden des Gauwasserbehälters im Einlassbereich angeordnet. Die natürliche Fließrichtung von Wasser ist somit vom Auslassbereich zum Einlassbereich hin. Ein Reinigungsabfluss ist bodenseitig im Einlassbereich angeordnet. Die Öffnung des Reinigungsabflusses liegt gemäß einem Ausgestaltungsbeispiel in der Ebene des Bodens und ist frei von einem Versatz zu diesem. Ein Frischwasserzulauf zur Zufuhr von Frischwasser ist erfindungsgemäß hingegen im Auslassbereich angeordnet. Der Auslassbereich kann als Reservoir für WC-Spülwasser dienen. Der Kulissenfilter umfasst neben dem zumindest einen Schieber noch wenigstens eine, dem zumindest einen Schieber zugeordnete, insbesondere feststehende, Kulisse. Kulisse und Schieber sind derart zueinander im Gauwasserbehälter angeordnet, dass zumindest in der abgesenkten Position des Schiebers ein Spalt zwischen Kulisse und Schieber ausgebildet ist, so dass im Einlassbereich zu filterndes Grauwasser durch die Spalte fließen muss, um in den Auslassbereich zu gelangen. Das zum Teil sedimentbeladene Grauwasser muss im Spalt vertikal nach oben über den Schieber fließen. Dadurch wird Sediment vom Grauwasser abgeschieden, welches absinkt und sich am Boden des Grauwasserbehälters sammelt. Der Kulissenfilter dient somit zur Filterung von Sediment aus dem Grauwasser, um das gefilterte, aufbereitete Grauwasser einem anderen Prozess, insbesondere einer Spülung einer Toilette, zuführen zu können.

Die Aufbereitungsvorrichtung kann weitergebildet einen Füllstandsensor aufweisen, welcher vorteilhaft im Auslassbereich angeordnet ist. Dieser ist zumindest ausgebildet, einen Grenzstand an aufbereitetem Grauwasser zu erfassen.

Damit immer genügend Wasser zum Spülen des WC-Moduls vorhanden ist, ist der Füllstandsensor vorgesehen,
der detektiert, sobald nicht mehr genügend aufbereitetes Grauwasser im Behälter ist, sodass der Frischwasserzulauf solange geöffnet wird, bis der Minimalstand wieder erreicht ist. Der Frischwasserzulauf dient gleichzeitig zur Reinigung des Behälters, um die Sedimente bei geöffnetem Reinigungsabfluss und gehobenen Schiebern heraus zu spülen.

Dazu ist der Grauwasserbehälter weitergebildet länglich ausgebildet, mit dem Einlassbereich auf der einen Seite und dem Auslassbereich auf der anderen und dem Kulissenfilter dazwischen. Einlassbereich, Kulissenfilter und Auslassbereich sind entlang einer Längsachse des Grauwasserbehälters in Reihe geschaltet. Damit genügen ein Reinigungsabfluss im Einlassbereich, um rückgespültes Sediment abzuführen, und ein Ablauf für aufbereitetes Grauwasser. Es genügt auch ein einziger Frischwasserzulauf im Auslassbereich, um abgesetztes Sediment mit zugeführtem Frischwasser über den abfallenden Boden zum Reinigungsabfluss zu spülen. Eine so ausgebildete Aufbereitungsvorrichtung für Grauwasser ist kostengünstiger herzustellen im Vergleich zu einer zylindersymmetrisch aufgebauten Aufbereitungsvorrichtung für Grauwasser und darüber hinaus noch einfacher zu reinigen, was zusätzlich Wartungskosten senkt.

Gemäß einer weiteren Weiterbildung der Erfindung ist der Frischwasserzulauf gegen eine Wand des Grauwasserbehälters gerichtet, beispielsweise gegen eine zum Einlassbereich entfernt angeordnete Stirnwand des Grauwasserbehälters, oder gegen einen im Grauwasserbehälter angeordneten und so zum Frischwasserzulauf ausgerichteten, ersten Strahlbrecher gerichtet, dass ein durch den Frischwasserzulauf in den Grauwasserbehälter austretender Frischwasserstrahl aufgefächert wird. Dabei trifft der Frischwasserstrahl insbesondere unmittelbar auf die Wand oder auf den ersten Strahlbrecher und wird dadurch, insbesondere breit, aufgefächert. Die Wand oder der erste Strahlbrecher dienen als Verteiler des Frischwassers im Grauwasserbehälter. Zusätzlich zur Aufteilung dient die Wand oder der erste Strahlbrecher zum Abbremsen des Frischwasserstroms.

Eine weitere Weiterbildung der Erfindung ist darin zu sehen, dass der Ablauf für aufbereitetes Grauwasser im Auslassbereich, insbesondere bodenseitig, angeordnet ist, wobei eine Öffnung des Ablaufs zum Durchtritt von aufbereitetem Grauwasser in den Ablauf, vom Boden des Grauwasserbehälters beabstandet angeordnet ist. Die Öffnung des Ablaufs ist somit gegenüber dem Boden des Grauwasserbehälters angehoben.

Beispielsweise weist der Ablauf ein Rohr auf, welches durch den Boden des Grauwasserbehälters geführt ist und in den Grauwasserbehälter hineinragt. Die Öffnung des Ablaufs ist dann entsprechend die im Grauwasserbehälter liegende Öffnung des Rohrs. Der Ablauf weist dann also ein Rohr auf, welches durch den Boden im Auslassbereich des Grauwasserbehälters geführt ist und in den Auslassbereich des Grauwasserbehälters hineinragt, wobei eine freie Öffnung des Rohrs zum Durchtritt von aufbereitetem Grauwasser in den Ablauf, gegenüber dem Boden des Grauwasserbehälters angehoben ist.

Die Öffnung des Ablaufs liegt dann beispielsweise in einer horizontalen Ebene, so dass das aufbereitete Grauwasser in Richtung der Erdbeschleunigung durch die Ablauföffnung in den Ablauf abfließt. Auch der Boden kann im Bereich des Ablaufs für aufbereitetes Grauwasser horizontal ausgebildet sein, so dass die Öffnung des Ablaufs und der Boden des Grauwasserbehälters parallel zueinander, jedoch mit einem vorgegebenen Mindestabstand zueinander, verlaufen.

Die Dicke der Rohrwand ist weitergebildet vernachlässigbar klein im Vergleich zur Länge des Rohrs innerhalb des Grauwasserbehälters.

Der über dem Boden erhöhte Abfluss hat den Vorteil, dass ausströmendes, aufbereitetes Grauwasser kein am Boden abgelagertes Sediment mitreißt. Der Stand der Technik gemäß DE 10 2013 205 084 B3 offenbart zwar ebenfalls einen Boden mit einem zentralen, erhöhten Abschnitt, von dem ein Ablauf ausgeht, nicht jedoch einen vom Boden vertikal nach oben abgesetzten Ablauf. Dadurch können nachfolgende Leitungen zur Toilette, die mit dem aufbereiteten Grauwasser gespült wird, seltener verstopfen, was verringerte Wartungskosten mit sich bringt.

In einer weiteren Weiterbildung weist der Grauwasserbehälter zwischen Ein- und Auslassbereich und somit im Bereich des Kulissenfilters Seitenwände auf, die im Wesentlichen parallel zueinander ausgerichtet sind und somit in im Wesentlichen parallelen Ebenen liegen. Der zumindest eine Schieber ist näherungsweise plattenförmig ausgebildet. Er ist zudem im Wesentlichen senkrecht zu den Seitenwänden im Grauwasserbehälter angeordnet. Insbesondere sind mehrere oder gar alle Schieber plattenförmig ausgebildet und insbesondere stehen mehrere Schieber und die den jeweiligen Schiebern zugeordneten feststehenden Kulissen, möglicherweise gar sämtliche Schieber und sämtliche den Schiebern zugeordnete Kulissen des Kulissenfilters, senkrecht auf den Seitenwänden. Ein plattenförmiger Schieber hat eine im Vergleich zu seiner Breite und zu seiner Höhe eine zu vernachlässigbare Dicke und wird daher als näherungsweise flächig betrachtet.

Weitergebildet weisen die Seitenwände des Grauwasserbehälters Führungen zum beweglichen Führen des zumindest einen plattenförmigen Schiebers auf. Der zumindest eine plattenförmige Schieber ist seitlich eingefasst und in den Führungen senkrecht zum plattenförmigen Schieber geführt, d.h. senkrecht auf den plattenförmigen Schieber wirkende Kräfte werden von den Führungen aufgenommen und in den Grauwasserbehälter geleitet. Da der plattenförmige Schieber insbesondere vertikal im Grauwasserbehälter ausgerichtet ist, seine Dicke und Breite somit in horizontaler Richtung gemessen werden, seine Höhe jedoch in vertikaler Richtung, ist er daher horizontal geführt. Gleichzeitig ermöglichen die Führungen eine Bewegung des Schiebers in vertikaler Richtung bzw. eine Bewegung des Schiebers mit zumindest einer Richtungskomponente in vertikaler Richtung.

Sind mehrere Kulissen und Schieber vorgesehen ist der sogenannte Kulissenweg längs angeordnet. Das zu filternde Grauwasser fließt vom Einlassbereich entlang einer Längsebene des Grauwasserbehälters zum Auslassbereich.

Eine weitere Weiterbildung der Erfindung besteht darin, dass der zumindest eine Schieber auf einer, einer insbesondere fest im Grauwasserbehälter angeordneten Kulisse zugewandten Fläche, eine, insbesondere waagerecht verlaufende und sich somit im Wesentlichen senkrecht zur Richtung der Bewegung des Schiebers aus der abgesenkten Position in die angehobene Position erstreckende, elastische Lippe aufweist, die ausgebildet und derart am Schieber angeordnet ist, in der abgesenkten Position des Schiebers den Spalt zwischen dem Schieber und der Kulisse frei zu geben und im angehobenen Zustand des Schiebers den Spalt zwischen dem Schieber und der Kulisse zu schließen und Anhaftungen an der dem Schieber zugewandten Fläche der feststehenden Kulisse bei einer Bewegung des Schiebers aus der abgesenkten Position in die angehobene Position abzustreifen. Spalte zwischen Kulissen und Schiebern verlaufen im Wesentlichen vertikal zwischen den parallel zueinander angeordneten Schiebern und Kulissen.

Die elastische Lippe ist insbesondere so am Schieber angeordnet, dass Sie in der abgesenkten Position des Schiebers unterhalb einer Unterseite der Kulisse verläuft, so dass ein Spalt zwischen Unterseite der Kulisse und elastischer Lippe und somit auch der Eingang in den vertikalen Spalt zwischen Kulisse und Schieber freigegeben ist. Sie weist einen vorgegebenen Abstand zur Unterseite der Kulisse in vertikaler Richtung auf. Der Schieber weist insbesondere eine Nut auf, in welcher die Lippe am Schieber zumindest teilweise angeordnet und über diese mit dem Schieber verbunden ist. Der Spalt zwischen Kulisse und elastischer Lippe soll dabei keine Engstelle für das Grauwasser darstellen. Die Spalte ähneln sich beispielsweise daher in ihren Abmessungen.

In horizontaler Richtung jedoch überdeckt die elastische Lippe die einer Unterseite der Kulisse in der abgesenkten Position des Schiebers jedoch leicht, so dass sie bei der Bewegung des Schiebers aus der abgesenkten Position in die angehobene Position die dem Schieber zugewandte Fläche der Kulisse berührt, sich dabei elastisch leicht verformt, um flächig an der Kulisse anzuliegen und dabei Anhaftungen an der Kulisse abzustreifen. Die elastische Lippe wirkt daher als eine Art Abzieher. Die elastische Verformung erfolgt im Wesentlichen senkrecht zum plattenförmigen Schieber. Da sich die elastische Lippe vorteilhaft über die gesamte Breite des Schieber erstreckt und da die feststehende Kulisse bevorzugt dieselbe Breite wie der ihr zugeordnete Schieber zwischen den Seitenwänden des Grauwasserbehälters aufweist, wird die feststehende Kulisse über ihre gesamte Breite von Anhaftungen befreit.

Gleichzeitig kann die feststehende Kulisse einen dem Schieber zugewandten, und insbesondere ebenfalls waagerecht verlaufenden, festen Abstreifer aufweisen, welcher ausgebildet ist, die elastische Lippe des Schiebers bei einer Bewegung des Schiebers aus der angehobenen Position in die abgesenkte Position elastisch weiter zu verformen und so Anhaftungen an der Lippe abzustreifen. Der feste Abstreifer ist dabei so auf der Kulisse und zum Schieber angeordnet, dass der Spalt zwischen dem Schieber und der Kulisse in der abgesenkten Position des Schiebers freigegeben ist. Der feste Abstreifer verläuft insbesondere oberhalb einer Oberseite des Schiebers, wenn sich der Schieber in der abgesenkten Position befindet. Auch er weist einen vorgegebenen Mindestabstand, insbesondere in vertikaler Richtung, zur Oberseite des Schiebers auf, so dass der Spalt zwischen dem Schieber und der Kulisse frei ist.

Der feste Abstreifer bildet einen Vorsprung auf der ansonsten ebenen Fläche der Kulisse - analog zum Vorsprung auf der ansonsten ebenen Fläche des Schiebers, welcher durch die elastische Lippe gebildet wird. Der feste Abstreifer ist insbesondere ortsfest und starr im Grauwasserbehälter angeordnet.

Überstreift die elastische Lippe bei der Bewegung des Schiebers aus der angehobenen Position in die abgesenkte Position den Abstreifer, wird die elastische Lippe, insbesondere senkrecht zum Schieber, weiter elastisch verformt und Anhaftungen an der Lippe werden gelöst, beispielsweise werden sie von der Lippe abgestreift. Diese werden sodann vom umgebenden Grauwasser auf den Boden des Grauwasserbehälters transportiert.

Gemäß einer vorteilhaften Weiterbildung ist ein Überlauf im Grauwasserbehälter, insbesondere im Einlassbereich des Grauwasserbehälters angeordnet. Gemäß einer Ausführungsform ist er nach oben offen.

Eine weitere Weiterbildung sieht vor, dass der, insbesondere deckelseitig angeordnete, Grauwasserzulauf gegen einen im Grauwasserbehälter angeordneten und zum Grauwasserzulauf entsprechend ausgerichteten zweiten Strahlbrecher gerichtet ist, so dass ein durch den Grauwasserzulauf in den Grauwasserbehälter austretender Grauwasserstrahl, insbesondere breit, aufgefächert wird. Darüber hinaus ist der zweite Strahlbrecher so zum Überlauf angeordnet, dass er den Überlauf in Richtung des Grauwasserzulaufs abschirmt. Insbesondere ist der zweite Strahlbrecher unterhalb des Grauwasserzulaufs angeordnet, der seinerseits beispielsweise deckenseitig angeordnet ist, und der zweite Strahlbrecher ist über dem nach oben offenen Überlauf angeordnet. Er hält Grauwasser aus dem Grauwasserzulauf davon abhält, unmittelbar in den Überlauf zu strömen. Dazu lenkt er den Grauwasserstrahl aus dem Grauwasserzulauf entsprechend in vom Überlauf wegweisende Richtungen ab. Er kann zusätzlich oder alternativ auch so vor der Öffnung des Überlaufs angeordnet sein, dass auch Spritzwasser vom Strahlbrecher selbst nicht in den Überlauf gelangt. Der Überlauf soll lediglich Grauwasser aufnehmen, das über die Höhe der Öffnung des Überlaufs im Grauwasserbehälter steht.

Gemäß einer weiteren Weiterbildung weist eine dem Einlassbereich zugewandte, feste Kulisse ein Leitblech auf, welches so zu einem Spalt zwischen der Kulisse und dem der Kulisse zugeordneten Schieber angeordnet ist, dass es den Spalt in Richtung des Grauwasserzulaufs abschirmt. Auch hier wird Grauwasser aus dem Grauwasserzulauf oder Spritzwasser vom zweiten Strahlbrecher davon abgehalten, unmittelbar in den Spalt zu strömen.

Erster und Zweiter Strahlbrecher sowie das Leitblech sind Strömungsleitbleche zur Lenkung der Strömung des Grauwassers.

Der Kulissenfilter weist vorteilhaft mehrere bewegliche Schieber und entsprechend mehrere, den beweglichen Schiebern zugeordnete feststehende Kulissen auf, bevorzugt jeweils drei.

Ein erfindungsgemäßes Schienenfahrzeug umfasst wenigstens eine erfindungsgemäße Aufbereitungsvorrichtung für Grauwasser. Beispielweise ist diese in einer Sanitärkabine, insbesondere unterhalb eines Handwaschbeckens angeordnet, dessen Grauwasser die Aufbereitungsvorrichtung aufbereiten soll. Vorteilhaft weisen mehrere Sanitärkabinen erfindungsgemäße Aufbereitungsvorrichtungen für Grauwasser auf. Diese sind auch im Bordküchen-/Galley-Bereich entsprechend einsetzbar bzw. eingesetzt.

Das Schienenfahrzeug kann weitergebildet neben der Aufbereitungsvorrichtung für Grauwasser umfassen:
- zumindest einen Frischwassertank,
- zumindest eine Frischwasserausgabestelle und
- eine Frischwasserzuleitung zwischen dem zumindest einen Frischwassertank und der zumindest einen Frischwasserausgabestelle,
- eine Frischwasserzuleitung zwischen dem zumindest einen Frischwassertank und der Frischwasserzulauf zur Zufuhr von Frischwasser im Auslassbereich des Grauwasserbehälters,
- zumindest eine Grauwassereingabestelle,
- zumindest eine Ausgabestelle für aufbereitetes Grauwasser,
- eine Grauwasserzuleitung zwischen der zumindest einen Grauwassereingabestelle und dem Grauwasserzulauf im Einlassbereich des Grauwasserbehälters der Aufbereitungsvorrichtung für Grauwasser und
- eine Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der zumindest einen Ausgabestelle für aufbereitetes Grauwasser.

Insbesondere zweigt die Frischwasserzuleitung vom Frischwassertank zum Frischwasserzulauf zur Zufuhr von Frischwasser im Auslassbereich des Grauwassertanks der Aufbereitungsvorrichtung für Grauwasser von der Frischwasserzuleitung zwischen dem Frischwassertank und der Frischwasserausgabestelle ab.

Die Grauwassereingabestelle kann beispielsweise als Auffang- oder Sammelstelle von Grauwasser dienen. Alternativ wird das Grauwasser von der Grauwassereingabestelle erzeugt. Eine Spül- oder Waschmaschine erzeugt beispielsweise Grauwasser. Ein Handwaschbecken hingegen fängt das durch einen Handwaschvorgang anfallende Grauwasser auf. Weitergebildet handelt es sich bei der Grauwassereingabestelle somit um ein Handwaschbecken, insbesondere einer Sanitärzelle des Schienenfahrzeugs. Es kann Teil eines Waschbeckenmoduls sein, welches seinerseits einen Wasserhahn als Frischwasserausgabestelle umfasst, welcher oberhalb des Handwaschbeckens angeordnet ist, so dass das aus dem Wasserhahn austretende Frischwasser durch das Handwaschbecken aufgefangen wird, wodurch es in diesem Augenblick als Grauwasser gilt und entsprechend weiter als Grauwasser behandelt wird. Das Schienenfahrzeug kann somit mindestens ein Waschbeckenmodul aufweisen, welches die Frischwasserausgabestelle sowie die Grauwassereingabestelle umfasst.

Das Schienenfahrzeug kann fürderhin wenigstens einen Schwarzwasserbereich mit zumindest einem Abwassertank und wenigstens einer Schwarzwassereingabestelle, sowie einer Schwarzwasserleitung zwischen der Schwarzwassereingabestelle und dem Abwassertank aufweisen.

Gemäß einer Weiterbildung ist der Reinigungsabfluss an der tiefsten Stelle des Bodens des Grauwasserbehälters angeordnet, so dass dieser zur sogenannten Frostschutzentleerung, näherungsweise vollständig entleerbar ist. Der Reinigungsabfluss kann über eine Schwarz- oder Abwasserleitung mit dem Abwassertank verbunden sein. Auch der Überlauf kann über eine Schwarz- oder Abwasserleitung mit dem Abwassertank verbunden sein.

Überdies kann das Schienenfahrzeug mindestens ein WC-Modul aufweisen, welches die Ausgabestelle für aufbereitetes Grauwasser sowie die Schwarzwassereingabestelle umfasst. Analog zum Waschbeckenmodul können Spüldüsen des WC-Moduls die Ausgabestelle für aufbereitetes Grauwasser bilden und eine WC-Schüssel bildet die Schwarzwassereingabestelle. Von dort wird das aufgefangene Schwarzwasser zum Abwassertank geführt.

Eine weitere Weiterbildung der Erfindung besteht darin, dass die Ausgabestelle für aufbereitetes Grauwasser oberhalb der Aufbereitungsvorrichtung für Grauwasser angeordnet ist. Insbesondere ist die Ausgabestelle für aufbereitetes Grauwasser oberhalb - also mit einem Abstand entgegen der Schwerkraft und somit in vertikaler Richtung - des Ablaufs für aufbereitetes Grauwasser im Auslassbereich des Grauwasserbehälters der Aufbereitungsvorrichtung für Grauwasser angeordnet. Gleichermaßen kann der Grauwasserbehälter der Aufbereitungsvorrichtung für Grauwasser unterhalb der Grauwassereingabestelle und somit mit einem Abstand in Schwerkraftrichtung zur Grauwassereingabestelle angeordnet sein.

Zur Förderung von aufbereitetem Grauwasser vom Ablauf für aufbereitetes Grauwasser im Auslassbereich des Grauwasserbehälters zur Ausgabestelle für aufbereitetes Grauwasser kann eine Pumpe in der Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser vorgesehen sein. Unter dem Begriff Pumpe sollen hier sämtliche Arbeitsmaschinen zur Förderung von Fluid als mit umfasst gelten.

Alternativ kann die Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser frei sein von einer Pumpe zur Förderung von aufbereitetem Grauwasser vom Ablauf für aufbereitetes Grauwasser im Auslassbereich des Grauwasserbehälters der Aufbereitungsvorrichtung für Grauwasser zur Ausgabestelle für aufbereitetes Grauwasser. Dann umfasst das WC-Modul einen Druckwassererzeuger. Der Druckwassererzeuger saugt das aufbereitete Grauwasser mit Unterdruck an und kann somit ebenfalls Höhendifferenzen überwinden.

Somit verbleibt kein aufbereitetes Grauwasser in der Zuleitung für aufgearbeitetes Grauwasser zwischen dem Ablauf für aufbereitetes Grauwasser im Auslassbereich des Grauwasserbehälters der Aufbereitungsvorrichtung für Grauwasser und der Ausgabestelle für aufbereitetes Grauwasser, was zu einer einfachen und effektiven Sicherung der Zuleitung gegen Frost führt.

Zur Regulierung des Durchflusses an Frischwasser durch die Frischwasserausgabestelle und/oder den Frischwasserzulauf und/oder zur Regulierung des Durchflusses an Schwarzwasser durch den Reinigungsabfluss kann das Schienenfahrzeug stromaufwärts, insbesondere unmittelbar vor, der Frischwasserausgabestelle und/oder stromaufwärts, insbesondere unmittelbar vor, dem Frischwasserzulauf und/oder stromabwärts, insbesondere unmittelbar nach, dem Reinigungsabfluss jeweils zumindest ein Absperrorgan, beispielsweise ein Ventil aufweisen, z.B. in den stromaufwärts angeordneten Frischwasserzuleitungen bzw. in der stromabwärts angeordneten Schwarzwasserleitung.

Die Absperrorgane in der Frischwasserzuleitung zwischen dem Frischwassertank und der Frischwasserausgabestelle sowie zwischen dem Frischwassertank und dem Frischwasserzulauf sind insbesondere nach einer Verzweigung in der Frischwasserzuleitung zur Frischwasserausgabestelle und zum Frischwasserzulauf vorgesehen, so dass sowohl das dem Grauwasserbehälter zugeführte Frischwasser als auch das der Frischwasserausgabestelle zugeführte Frischwasser zumindest jeweils, insbesondere jeweils nur das entsprechend zugeordnete Absperrorgan passiert.

Für den Fall, dass die Aufbereitungsvorrichtung für Grauwasser nicht funktioniert oder nicht genügend aufbereitetes Grauwasser zur Verfügung steht, muss trotzdem sicher gestellt werden, dass das WC-Modul mit Spülwasser versorgt wird.

Der Füllstandsensor detektiert den Füllstand an aufbereitetem Grauwasser im Grauwasserbehälter und erzeugt ein entsprechendes Signal zumindest für den Fall, dass nicht mehr genügend aufbereitetes Grauwasser im Grauwasserbehälter ist, so dass der Frischwasserzulauf solange geöffnet wird, bis der Minimalstand wieder erreicht ist.

Das Schienenfahrzeug kann eine Steuerungseinheit umfassen, die ausgebildet ist, zumindest das Absperrorgan stromaufwärts des Frischwasserzulaufs des Grauwasserbehälters der Aufbereitungsvorrichtung für Grauwasser zur Regulierung des Durchflusses an Frischwasser aus dem Frischwassertank durch den Frischwasserzulauf in Abhängigkeit des Signals des Füllstandsensors zu steuern, zumindest zu öffnen und zu schließen.

Die Ausgabestelle für aufbereitetes Grauwasser ist weitergebildet frei von einer unmittelbaren Zuleitung von Frischwasser aus dem Frischwassertank, abgesehen vom Frischwasserzulauf in den Grauwasserbehälter, der unmittelbar über einer Frischwasserzuleitung mit dem Frischwassertank verbunden ist. Eine weitere Zuleitung ist daher überflüssig. Da der Frischwasserzulauf im Auslassbereich des Grauwasserbehälters angeordnet ist, kann ein Mangel an aufbereitetem Grauwasser im Auslassbereich des Grauwasserbehälters einfach durch zugeführtes Frischwasser ausgeglichen werden.

Das Absperrorgan zur Regulierung des Durchflusses an Frischwasser durch die Frischwasserausgabestelle kann beispielsweise manuell durch einen Benutzer betätigt werden. Das Absperrorgan zur Regulierung des Durchflusses an Schwarzwasser durch den Reinigungsabfluss kann ebenfalls von der Steuerungseinheit in vorgegebenen zeitlichen Intervallen oder manuell bei Wartungsarbeiten geöffnet und geschlossen werden.

Das Absperrorgan stromabwärts des Reinigungsabfluss kann als einfaches Quetschventil ausgebildet sein.

Weitergebildet ist die Frischwasserzuleitung zwischen dem Frischwassertank und der Frischwasserausgabestelle frei von einer Pumpe zur Förderung von Frischwasser zwischen dem Frischwassertank und der Frischwasserausgabestelle, insbesondere wobei der Frischwassertank der Aufbereitungsvorrichtung für Grauwasser entgegen der Schwerkraftrichtung oberhalb der Frischwasserausgabestelle angeordnet ist. Es handelt sich somit um eine sogenannte Fallwasseranlage.

Eine weitere Weiterbildung der Erfindung liegt darin dass Schmutzfilter in der Frischwasserzuleitung zwischen dem Frischwassertank und der Frischwasserausgabestelle und/oder in der Zuleitung für aufbereitetes Grauwasser zwischen dem Ablauf für aufbereitetes Grauwasser im Auslassbereich der Aufbereitungsvorrichtung für Grauwasser und der Ausgabestelle für aufbereitetes Grauwasser vorgesehen sind.

Das Schmutzfilter in der Frischwasserzuleitung zwischen dem Frischwassertank und der Frischwasserausgabestelle ist insbesondere vor einem Abzweig zum Frischwasserzulauf zur Zufuhr von Frischwasser im Auslassbereich der Aufbereitungsvorrichtung für Grauwasser vorgesehen, so dass auch das dem Grauwasserbehälter zugeführte Frischwasser aus dem Frischwassertank das Schmutzfilter passiert.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine erfindungsgemäße Aufbereitungsvorrichtung im Längsschnitt von der Seite,
- Fig. 2: zeigt die Aufbereitungsvorrichtung für Grauwasser aus Fig. 1 im Längsschnitt von der oben,
- Fig. 3: zeigt schematisch eine erfindungsgemäße Wasserversorgungseinrichtung eines Schienenfahrzeugs mit einer Pumpe,
- Fig. 4: zeigt ein Wasserschema ohne Pumpe.

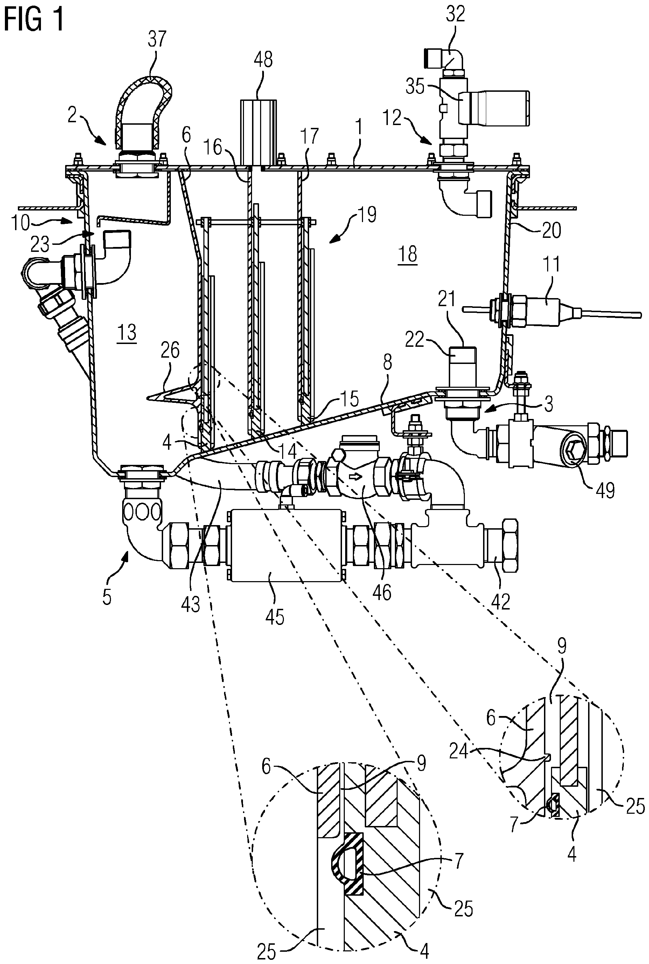

In Fig. 1 ist eine erfindungsgemäße Aufbereitungsvorrichtung im Längsschnitt dargestellt.

Die Aufbereitungsvorrichtung für Grauwasser dient zur Durchführung eines Verfahrens zur Sedimentation, welche Aufbereitungsvorrichtung sich hier durch einen längs angeordneten Kulissenweg sowie Einrichtungen zur Selbstreinigung der Kulissen auszeichnet.

Die Aufbereitungsvorrichtung umfasst einen Grauwasserzulauf 2 in einem Einlassbereich 13, einen Ablauf 3 für aufbereitetes

Grauwasser in einem Auslassbereich 18 und einem Kulissenfilter 19 zwischen Ein- und Auslassbereich. Einlassbereich 13, Kulissenfilter 19 und Auslassbereich 18 sind hintereinander aufgereiht.

Der Kulissenfilter 19 umfasst hier drei feststehende Kulissen 6, 16 und 17 sowie drei bewegliche Schieber 4, 14 und 15, die in einer abgesenkten Position den Boden 8 des Gauwasserbehälters 1 berühren und in einer angehobenen Position von diesem abgehoben sind.

Der Boden 8 des Gauwasserbehälters 1 ist vom Einlassbereich 13 aus gesehen zum Auslassbereich 18 hin ansteigend ausgebildet.

Ein Reinigungsabfluss 5 ist bodenseitig im Einlassbereich 13, ein Frischwasserzulauf 12 zur Zufuhr von Frischwasser ist deckelseitig im Auslassbereich 18 angeordnet.

Auch ein Überlauf 23 ist nach oben offen im Einlassbereich 13 angeordnet, sowie ein Strahlbrecher 10, der oberhalb des Überlaufs 23 so zum Grauwasserzulauf 2 ausgerichtet ist, dass der Überlauf 23 zum Grauwasserzufluss 2 hin abgeschirmt ist.

Über den Grauwasserzulauf 2 fließt das Grauwasser in den Gauwasserbehälter 1. Der Strom wird gegen den hier rund ausgebildeten Strahlbrecher 10 geleitet, der den Strom in alle Richtungen aufteilt und abbremst. Unter dem Strahlbrecher 10 befindet sich der Überlauf 23, so dass kein Wasser in den Überlauf 23 spritzt. Im unteren Bereich des Einlassbereichs 13 befindet sich zusätzlich ein Leitblech 26, welches den Strom daran hindert, direkt zum Spalt 9 zwischen erster Kulisse 4 und erstem Schieber 6 zu fließen.

Die drei beweglichen Schieber 4, 14 und 15 laufen in Führungen 25 und sorgen zusammen mit den festen Kulissen 6, 16 und 17 dafür, dass das vorgegebene Spaltmaß des Spalts 9 zwischen Kulissen und Schiebern eingehalten wird. Die Schieber 4, 14 und 15 werden horizontal geführt, um eine vertikale Bewegung auszuführen. Die Führungen 25 sind hier als Nuten in Seitenwänden des Grauwasserbehälters 1 ausgeführt. Alternative Formen, wie beispielsweise Führungsschienen, sind denkbar.

Die Schieber 4, 14 und 15 selbst sind gemäß diesem Ausgestaltungsbeispiel mechanisch über ein Gestänge miteinander verbunden, so dass sie gemeinsam angehoben und abgesenkt werden können. Das Gestänge ist dazu mit einem Hubzylinder 48, hier einem pneumatischen Hubzylinder, verbunden. Anstelle des pneumatischen Hubzylinders können auch hydraulische oder elektrische Aktoren zum Heben und Senken der Schieber 4, 14 und 15, beispielsweise auch einzeln und damit getrennt voneinander, eingesetzt werden.

In den Schiebern 4, 14 und 15 ist jeweils eine Nut vorgesehen, in welcher sich eine flexible Lippe 7 befindet. Bei Bedarf können die Schieber 4, 14 und 15 bewegt werden, um die Spalte 9 zu reinigen. Dazu ist oberhalb des Spaltes 9 an den Kulissen 6, 16 und 17 noch ein fester Abstreifer 24 angebracht, der dazu dient, dass der Schmutz sich von der flexiblen Lippe 7 löst.

Nachdem das Wasser die drei Kulissen passiert hat befindet es sich in der letzten Kammer - im sogenannten Auslassbereich 18 des Grauwasserbehälters 1, der als Reservoir für das WC-Spülwasser dient. Zum WC-Modul fließt es über den Ablauf 3, der um ein Rohr 22 verlängert ist, damit das ausströmende Wasser kein Sediment mitreißt. Über einen Reinigungsabfluss 5 kann der Grauwasserbehälter 1 komplett entleert werden.

Damit immer genügend Wasser zum Spülen des WC-Moduls vorhanden ist, ist ein Füllstandsensor 11 vorgesehen, der detektiert, sobald nicht mehr genügend Wasser im Behälter 1 ist, sodass der Frischwasserzulauf 12 solange geöffnet wird, bis der Minimalstand erreicht ist. Der Frischwasserzulauf 12 dient gleichzeitig zur Reinigung des Behälters 1 und ist gegen die Stirnwand 20 gerichtet, damit der Wasserstrahl breit aufgefächert wird, um die Sedimente bei geöffnetem Reinigungsabfluss 5 und angehobenen Schiebern 4, 14 und 15 heraus zu spülen. Bei angehobenen Schiebern 4, 14 und 15 ist deren unteres Ende vom Boden 8 des Gauwasserbehälters 1 abgehoben. In der hier veranschaulichten abgesenkten Position stehen die unteren Enden der Schieber 4, 14 und 15 auf dem Boden 8 des Gauwasserbehälters 1 auf.

Der Überlauf kann mit dem Reinigungsabfluss außerhalb des Grauwasserbehälters zusammengeführt werden.

Beschrieben ist eine mikrofilterfreie, wartungsminimierte Aufbereitungsvorrichtung für Grauwasser, die sich selbst reinigt und im laufenden Betrieb ohne Reinigungsmittel auskommt.

Der Strahlbrecher 10 bremst den Zustrom an Grauwasser ab und verteilt es im Einlassbereich. Der Überlauf 23 ist unter dem Strahlbrecher 10 platziert, sodass kein zulaufendes Wasser direkt wieder abgeführt wird. Das Leitblech 26 leitet den Strom um, sodass dieser erst später den Spalt 9 erreicht. Elastische Lippe 7 und Abstreifer 24 als festem Gegenstück an den Kulissen 6, 16 und 17, reinigen die Kulissenspalte 9. Das Ablaufrohr 22 mit Öffnung 21 in erhöhter Position und der gegen die Behälterwand 20 gerichtete Frischwasserzulauf 12 zur Auffächerung des Stroms tragen, wie die oben bereits genannten Merkmale, ebenfalls dazu bei, die sogenannten Life Cycle Costs der erfindungsgemäßen Aufbereitungsvorrichtung zu senken.

Die Zu- und Abläufe des Grauwasserbehälters 1 sind mit diversen, außerhalb des Grauwasserbehälters geführten Leitungen verbunden. So kann der Grauwasserzulauf 2 über eine Grauwasserleitung 37 mit einem Waschbecken verbunden sein. In der Grauwasserleitung 37 kann dabei ein Rückschlagventil vorgesehen sein als Geruchsverschluss und als Druckschutz. Der Überlauf 23 ist über eine Überlaufleitung 43 mit einem Abwassertank verbunden. Hier umfasst die Überlaufleitung 43 ebenfalls ein Rückschlagventil 46. Dieses dient demselben Zweck und könnte als redundant auch wegfallen. Die Überlaufleitung 43 mündet stromabwärts des Rückschlagventils 46 in eine Abwasserleitung 42. Diese ist ihrerseits mit dem Reinigungsabfluss 5 verbunden. Zwischen dem Reinigungsabfluss 5 und der Mündung der Überlaufleitung 43 in die Abwasserleitung 42 ist ein Quetschventil als Absperrorgan 45 in der Abwasserleitung 42 angeordnet. Stromaufwärts des Frischwasserzulaufs 12 und somit zwischen dem Frischwasserzulauf 12 und einem Frischwassertank ist ein Absperrorgan 35 in der Frischwasserzuleitung 32 vorgesehen, über welches die Frischwasserzufuhr zum Grauwasserbehälter 1 geregelt werden kann. Stromabwärts des Ablaufs 3 für aufbereitetes Grauwasser ist gemäß dieser Ausgestaltung wiederum ein Schmutzfänger 49 angeordnet.

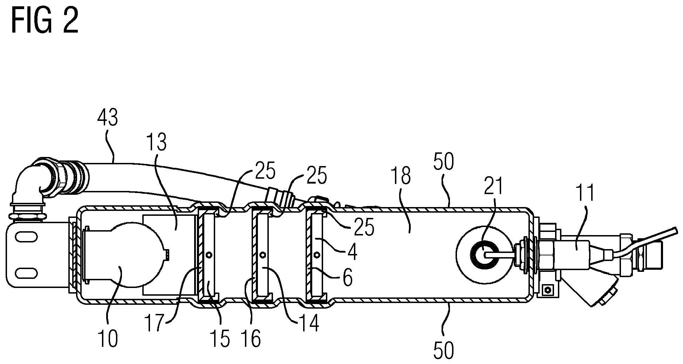

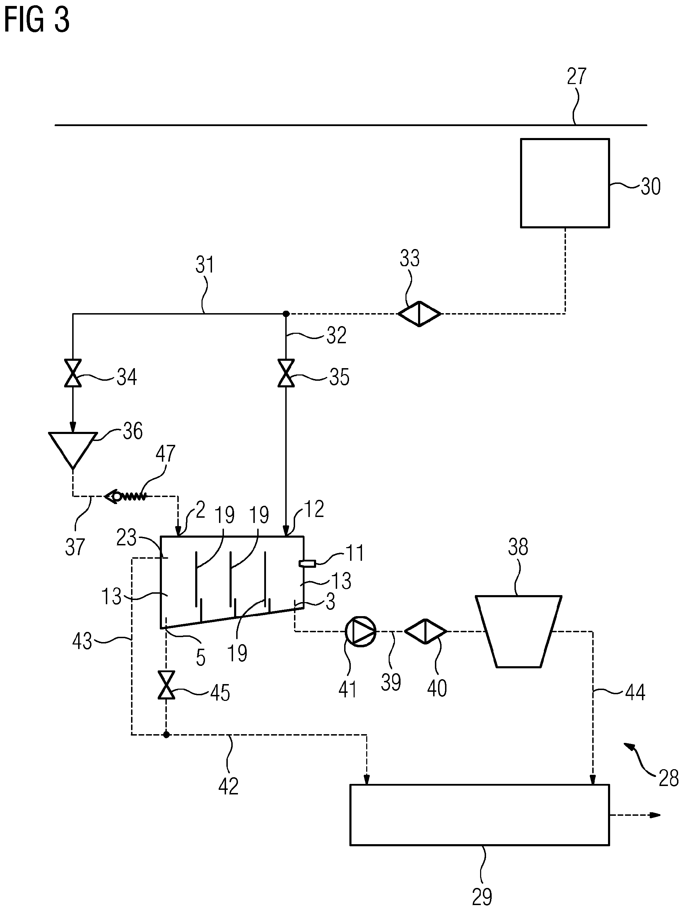

Fig. 2 illustriert die Aufbereitungsvorrichtung für Grauwasser gemäß Fig. 3 durch einen Längsschnitt von oben. Gut zu erkennen sind die beweglichen Schieber 4, 14 und 15, die entsprechenden Führungen 25 an den Seitenwänden 50, die festen Kulissen 6, 16 und 17 sowie der Strahlbrecher 10 im Einlassbereich 13, der Füllstandssenor 11 im Auslaufbereich oberhalb der Öffnung 21 des Ablaufrohrs 22.

In Fig. 3 ist ein Wasserschema eines erfindungsgemäßen Schienenfahrzeugs mit Grauwasseraufbereitung und zugehöriger Peripherie dargestellt. Die Bezugszeichen 27 und 28 kennzeichnen dabei ein Dach 27 des Wagenkastens und einen Boden 28 des Wagenkastens, zwischen welchen die Wasserversorgungseinrichtung des Schienenfahrzeugs größtenteils angeordnet ist. Einzig ein Abwassertank 29 kann unterhalb des Bodens 28 angeordnet sein. Ein Frischwassertank 30 hingegen ist bevorzugt unter dem Dach 27 angeordnet. Der Frischwassertank 30 kann eine Öffnung zur Umwelt des Schienenfahrzeugs aufweisen, um ihn von außen zu befüllen. Analog kann der Abwassertank 29 eine Öffnung zur Umwelt des Schienenfahrzeugs aufweisen, um ihn von außen abzusaugen.

Frischwasser aus dem Frischwassertank 30 wird durch eine Frischwasserzuleitung 31 einem Waschbecken zugeführt. Das Ende der Frischwasserzuleitung 31 über dem Waschbecken, aus welchem das Frischwasser in das Waschbecken fließt, wird als Frischwasserausgabestelle bezeichnet, das Waschbecken wirkt als Grauwassereingabestelle 36. Vorher passiert es einen Schmutzfilter 33 und ein dem Waschbecken als Grauwassereingabestelle 36 zugeordnetes und unmittelbar über dem Waschbecken angeordnetes Absperrorgan 34, beispielsweise ein Wasserhahn. Zwischen dem Schmutzfilter 33 und dem Absperrorgan 34 zweigt eine Frischwasserzuleitung 32 von der Frischwasserzuleitung 31 ab. Diese führt Frischwasser aus dem Frischwassertank 30 zu einem Grauwasserbehälter 1 einer Aufbereitungsvorrichtung für Grauwasser.

Ein Frischwasserzulauf 12 des Grauwasserbehälters 1 zur Zufuhr von Frischwasser ist in einem Auslassbereich 18 des Grauwasserbehälters 1 der Aufbereitungsvorrichtung für Grauwasser angeordnet. Der Frischwasserzulauf 12 ist mit der Frischwasserzuleitung 32 verbunden. Sobald das Frischwasser den Frischwasserzulauf 12 passiert und in den Auslassbereich 18 des Grauwasserbehälters 1 gelangt, gilt es ebenfalls als Grauwasser.

Damit endet der Frischwasserbereich vom Frischwassertank 30 ausgesehen mit der Frischwasserausgabestelle einerseits und dem Frischwasserzulauf 12 andererseits. Vor dem Frischwasserzulauf 12 und somit stromaufwärts des Frischwasserzulauf 12 in der Frischwasserzuleitung 32, insbesondere nach dem Schmutzfilter 33, kann ein Absperrorgan 35 zur Regulierung der Frischwasserzufuhr in den Grauwasserbehälter 1 angeordnet sein.

Das Grauwasser aus dem Waschbecken als Grauwassereingabestelle 36 wird in den Grauwasserbehälter 1 der Aufbereitungsvorrichtung für Grauwasser geleitet und dort durch Sedimentation des enthaltenen Schmutzes gereinigt.

Dazu umfasst der Grauwasserbehälter 1 der Aufbereitungsvorrichtung für Grauwasser fürderhin einen Grauwasserzulauf 2 in einem Einlassbereich 13 des Grauwasserbehälters 1, einen Ablauf 3 für aufbereitetes Grauwasser im Auslassbereich 18 des Grauwasserbehälters 1, sowie wenigstens ein Filter 19 zwischen Einlassbereich 13 und Auslassbereich 18 des Grauwasserbehälters 1.

Hier handelt es sich um ein Kulissenfilter 19 mit drei fest stehenden Kulissen und drei den Kulissen zugeordneten, beweglichen Schiebern, die in einer abgesenkten Position den Boden des Gauwasserbehälters 1 berühren und in einer angehobenen Position von diesem abgehoben sind.

Eine Grauwasserzuleitung 37 ist zwischen dem Waschbecken als Grauwassereingabestelle 36 und dem Grauwasserzulauf 2 im Einlassbereich 13 des Grauwasserbehälters 1 der Aufbereitungsvorrichtung für Grauwasser angeordnet. Um zu verhindern, dass Gerüche über die Grauwasserzuleitung 37 vom Grauwasserbehälter 1 über das Waschbecken als Grauwassereingabestelle 36 in den Innenraum des Schienenfahrzeugs abgegeben werden, weist die Grauwasserzuleitung 37 zwischen dem Waschbecken als Grauwassereingabestelle 36 und dem Grauwasserzulauf 2 des Grauwasserbehälters 1 ein Rückschlagventil 47 auf. Neben der Funktion als Geruchsverschluss kann dieses auch als Druckschutz wirken.

Hinter den Reinigungsstufen des Filters 19 kann das aufgearbeitete Grauwasser für ein WC-Modul als Ausgabestelle für aufbereitetes Grauwasser 38 über einen Ablauf 3 entnommen werden. Da sich die Aufbereitungsvorrichtung für Grauwasser unterhalb des Waschbeckens als Grauwassereingabestelle 36 befindet, kann sich dieser Ablauf 3 unterhalb der Ausgabestelle für das aufbereitete Grauwasser des WC-Moduls, beispielsweise einer Spüldüse oder eines sonstigen Zulaufs, befinden. Dafür ist hier eine Pumpe 41 integriert, die das aufbereitete Grauwasser auf die erforderliche Höhe pumpt. Hinter der Pumpe 41 oder auch davor ist ein Schmutzfänger 40 platziert, der das WC-Modul vor zu großen Restpartikeln schützt.

Pumpe 41 und Schmutzfänger 40 sind dazu in einer Zuleitung 39 für aufgearbeitetes Grauwasser zwischen dem Ablauf 3 für aufbereitetes Grauwasser im Auslassbereich 18 des Grauwasserbehälters 1 der Aufbereitungsvorrichtung für Grauwasser und der zumindest einen Ausgabestelle 38 für aufbereitetes Grauwasser angeordnet. Das WC-Modul ist derart ausgebildet, dass es mit aufbereitetem Grauwasser gespült wird.

Das im WC anfallende Schwarzwasser wird über eine Schwarzwasserleitung 44 in den Abwassertank 29 abgeführt. Gleichermaßen wird das sedimentbeladene Abwasser des Grauwasserbehälters 1 aus einem bodenseitig im Einlassbereich 13 des Grauwasserbehälters 1 angeordneten Reinigungsabfluss 5 dem Abwassertank 29 über eine weitere Abwasserleitung 42, mit welcher der angeordneten Reinigungsabfluss 5 sowie der Abwassertank 29 verbunden sind, zugeführt. Ein Absperrorgan 45, hier ein Quetschventil, unterhalb des Reinigungsabfluss 5 gibt den Abwasserstrom frei. Darüber hinaus kann der Grauwasserbehälter 1 einen Überlauf 23 aufweisen, der mit einer Überlaufleitung 43 verbunden ist, die ihrerseits in die Abwasserleitung 42 mündet.

Damit dem WC-Modul immer genügend Wasser zur Verfügung steht, auch bei unregelmäßiger Benutzung des Waschbeckens und bei Verstopfung des Filters 19 der Aufbereitungsvorrichtung für Grauwasser, befindet sich in dem Auslassbereich 18 ein Füllstandsensor 11, hier ein Grenzstandsensor, der detektiert, sobald er nicht mehr mit Wasser bedeckt ist. Über den Frischwasserzulauf 12 oberhalb wird dann solange Frischwasser in den Grauwasserbehälter 1 der Aufbereitungsvorrichtung für Grauwasser dosiert bis der Füllstandsensor 11 wieder mit Wasser bedeckt ist.

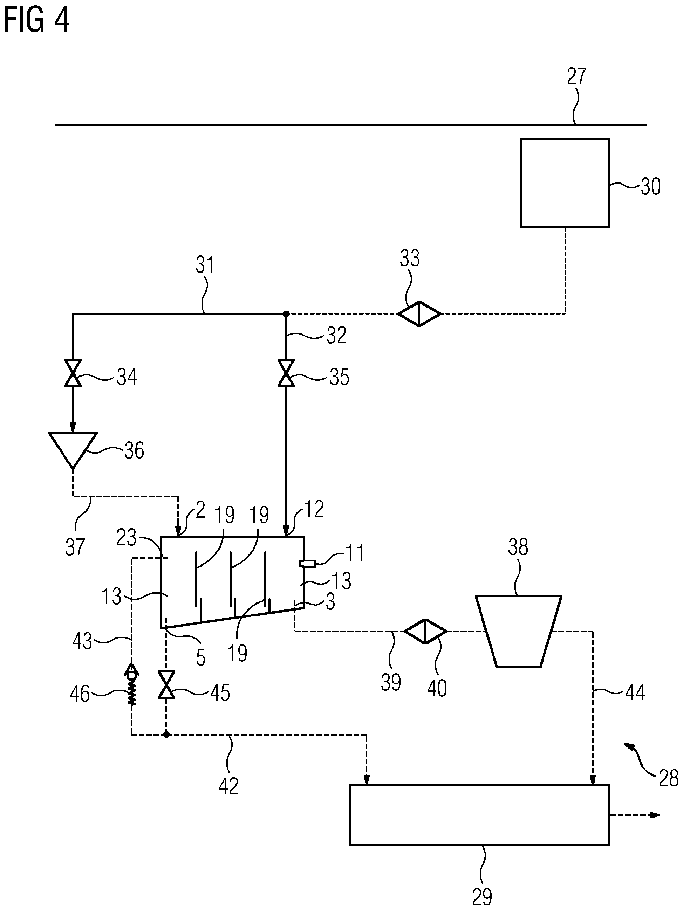

Fig. 4 ist eine Variante des Wasserschemas dargestellt, die ohne Pumpe auskommt, da das zusammen mit der Anlage verbaute WC-Modul einen Druckwassererzeuger enthält. Dieser saugt das Wasser mit Unterdruck an und kann so Höhendifferenzen überbrücken. Zusätzlich ist in der Überlaufleitung 43 ein Rückschlagventil 46 vorgesehen, so dass Flüssigkeit aus dem Grauwasserbehälter ungehindert abfließen kann, Druckstöße von Seiten des Abwasserbehälters 29 jedoch vom Grauwasserbehälter ferngehalten werden. Die Überlaufleitung 43 mündet schließlich stromabwärts des Quetschventils 45 in die Abwasserleitung 42. Das Rückschlagventil 46 dient als Geruchsverschluss und als Druckschutz und ist alternativ zum Rückschlagventil 47 aus der Ausführung gemäß Fig. 3 vorgesehen, auf welches dann verzichtet werden kann.

## Patentansprüche

1. Aufbereitungsvorrichtung für Grauwasser für ein Schienenfahrzeug, mit einem Grauwasserbehälter (1), einem Grauwasserzulauf (2) in einem Einlassbereich (13), einem Ablauf (3) für aufbereitetes Grauwasser in einem Auslassbereich (18) und einem Kulissenfilter (19) zwischen Ein- und Auslassbereich, welcher zumindest einen beweglichen Schieber (4, 14, 15) aufweist, der in einer abgesenkten Position den Boden (8) des Gauwasserbehälters (1) berührt und in einer angehobenen Position von diesem abgehoben ist, wobei der Boden (8) des Gauwasserbehälters (1) vom Einlassbereich (13) zum Auslassbereich (18) ansteigend ist, wobei ein Reinigungsabfluss (5) bodenseitig im Einlassbereich (13) angeordnet ist und wobei ein Frischwasserzulauf zur Zufuhr von Frischwasser angeordnet ist, **dadurch gekennzeichnet, dass** der Frischwasserzulauf (12) im Auslassbereich (18) angeordnet ist.

2. Aufbereitungsvorrichtung nach Anspruch 1,
**dadurch gekennzeichnet, dass**
der Frischwasserzulauf (12) gegen eine Wand des Grauwasserbehälters (20) oder gegen einen im Grauwasserbehälter (1) angeordneten und zum Frischwasserzulauf (12) ausgerichteten Strahlbrecher gerichtet ist, so dass ein durch den Frischwasserzulauf (12) in den Grauwasserbehälter (1) austretender Frischwasserstrahl aufgefächert wird.

3. Aufbereitungsvorrichtung nach einem der Ansprüche 1 oder 2,
**dadurch gekennzeichnet, dass**
eine Öffnung (21) des Ablaufs (3) zum Durchtritt von aufbereitetem Grauwasser in den Ablauf (3), vom Boden (8) des Grauwasserbehälters (1) beabstandet angeordnet ist.

4. Aufbereitungsvorrichtung nach Anspruch 3,
**dadurch gekennzeichnet, dass**
der Ablauf (3) ein Rohr (22) aufweist, welches durch den Boden (8) des Grauwasserbehälters (1) geführt ist und in den Grauwasserbehälter hineinragt.

5. Aufbereitungsvorrichtung nach einem der Ansprüche 1 bis 4,
**dadurch gekennzeichnet, dass**
der Grauwasserbehälter (1) zwischen Einlassbereich (13) und Auslassbereich (18) Seitenwände aufweist, die parallel zueinander angeordnet sind, wobei der zumindest eine Schieber (4, 14, 15) plattenförmig ausgebildet und senkrecht zu den Seitenwänden angeordnet ist.

6. Aufbereitungsvorrichtung nach Anspruch 5,
**dadurch gekennzeichnet, dass**
die Seitenwände Führungen (25) zum Führen des zumindest einen Schiebers (4, 14, 15) aufweisen.

7. Aufbereitungsvorrichtung nach einem der Ansprüche 1 bis 6,
**dadurch gekennzeichnet, dass**
der zumindest eine Schieber (4, 14, 15) auf einer, einer fest stehenden Kulisse (6, 16, 17) zugewandten Fläche, eine elastische Lippe (7) aufweist, die ausgebildet ist, im abgesenkten Zustand des Schiebers (4, 14, 15) einen Spalt zwischen dem Schieber (4, 14, 15) und der Kulisse (6, 16, 17) frei zu geben und im angehobenen Zustand des Schiebers (4, 14, 15) einen Spalt zwischen dem Schieber (4, 14, 15) und der Kulisse (6, 16, 17) zu schließen und Anhaftungen an der dem Schieber (4, 14, 15) zugewandten Fläche der Kulisse (6, 16, 17) bei einer Bewegung des Schiebers (4, 14, 15) aus der abgesenkten Position in die angehobene Position abzustreifen.

8. Aufbereitungsvorrichtung nach Anspruch 7,
**dadurch gekennzeichnet, dass**
die Kulisse (6, 16, 17) einen dem Schieber (4, 14, 15) zugewandten festen Abstreifer aufweist, welcher ausgebildet ist, die elastische Lippe (7) des Schiebers (4, 14, 15) bei einer Bewegung des Schiebers (4, 14, 15) aus der angehobenen Position in die abgesenkte Position elastisch zu verformen und so Anhaftungen an der Lippe (7) abzustreifen und im abgesenkten Zustand des Schiebers (4, 14, 15) einen Spalt zwischen dem Schieber (4, 14, 15) und der Kulisse (6, 16, 17) frei zu geben.

9. Aufbereitungsvorrichtung nach einem der Ansprüche 1 bis 8,
**dadurch gekennzeichnet, dass**
der Grauwasserzulauf (2) gegen einen im Grauwasserbehälter (1) angeordneten und zum Grauwasserzulauf (2) ausgerichteten Strahlbrecher (10) gerichtet ist, so dass ein durch den Grauwasserzulauf (2) in den Grauwasserbehälter (1) austretender Grauwasserstrahl aufgefächert wird, wobei der Strahlbrecher (10) so zu einem Überlauf (23) angeordnet ist, dass er den Überlauf (23) in Richtung des Grauwasserzulaufs (2) abschirmt.

10. Aufbereitungsvorrichtung nach einem der Ansprüche 1 bis 9,
**dadurch gekennzeichnet, dass**
eine dem Einlassbereich (13) zugewandte, feste Kulisse (6, 16, 17) ein Leitblech (26) aufweist, welches so zu einem Spalt (9) zwischen der Kulisse (6, 16, 17) und einem der Kulisse zugeordneten Schieber (4, 14, 15) angeordnet ist, dass es den Spalt (9) in Richtung des Grauwasserzulaufs (2) abschirmt.

11. Aufbereitungsvorrichtung nach einem der Ansprüche 1 bis 10,
**dadurch gekennzeichnet, dass**
der Kulissenfilter zumindest drei bewegliche Schieber (4, 14, 15) aufweist.

12. Aufbereitungsvorrichtung nach einem der Ansprüche 1 bis 11,
**dadurch gekennzeichnet, dass**
sie einen Füllstandsensor (11) im Auslassbereich aufweist.

13. Schienenfahrzeug mit wenigstens einer Aufbereitungsvorrichtung für Grauwasser nach einem der Ansprüche 1 bis 12.

14. Schienenfahrzeug nach Anspruch 13,
**dadurch gekennzeichnet, dass**
es umfasst:
- zumindest einen Frischwassertank (30),
- zumindest eine Frischwasserausgabestelle und
- eine Frischwasserzuleitung zwischen dem zumindest einen Frischwassertank (30) und der zumindest einen Frischwasserausgabestelle,
- eine Frischwasserzuleitung (32) zwischen dem zumindest einen Frischwassertank (30) und der Frischwasserzulauf (12) zur Zufuhr von Frischwasser im Auslassbereich (18) des Grauwasserbehälters (1),
- zumindest eine Grauwassereingabestelle (36),
- die zumindest einen Aufbereitungsvorrichtung für Grauwasser,
- zumindest eine Ausgabestelle (38) für aufbereitetes Grauwasser,
- eine Grauwasserzuleitung (37) zwischen der zumindest einen Grauwassereingabestelle (36) und dem Grauwasserzulauf (2) im Einlassbereich (13) des Grauwasserbehälters (1) der Aufbereitungsvorrichtung für Grauwasser und
- eine Zuleitung (39) für aufgearbeitetes Grauwasser zwischen dem Ablauf (3) für aufbereitetes Grauwasser im Auslassbereich (18) des Grauwasserbehälters (1) der Aufbereitungsvorrichtung für Grauwasser und der zumindest einen Ausgabestelle (38) für aufbereitetes Grauwasser.

15. Schienenfahrzeug nach einem der Ansprüche 13 oder 14,
**dadurch gekennzeichnet, dass**
die zumindest eine Ausgabestelle für aufbereitetes Grauwasser frei ist von einer Zuleitung von Frischwasser aus dem zumindest einen Frischwassertank (30).

## Claims

1. Treatment apparatus for grey water for a rail vehicle, having a grey water container (1), a grey water inflow (2) in an inlet region (13), an outflow (3) for treated grey water in an outlet region (18), and a gate filter (19) between the inlet and outlet regions, said gate filter having at least one movable slide (4, 14, 15) which, in a lowered position, makes contact with the base (8) of the grey water container (1) and, in a raised position, is raised off therefrom, wherein the base (8) of the grey water container (1) rises from the inlet region (13) to the outlet region (18), wherein a cleaning drain (5) is arranged in the inlet region (13) on the base side, and wherein there is arranged a fresh water inflow for the supply of fresh water,
**characterized in that** the fresh water inflow (12) is arranged in the outlet region (18).

2. Treatment apparatus according to Claim 1,
**characterized in that**
the fresh water inflow (12) is directed against a grey water container wall (20) or against a jet breaker which is arranged in the grey water container (1) and which is aligned with respect to the fresh water inflow (12) such that a jet of fresh water exiting through the fresh water inflow (12) into the grey water container (1) is fanned out.

3. Treatment apparatus according to either of Claims 1 and 2,
**characterized in that**
an opening (21) of the outflow (3) for the passage of treated grey water into the outflow (3) is arranged spaced apart from the base (8) of the grey water container (1).

4. Treatment apparatus according to Claim 3,
**characterized in that**
the outflow (3) has a pipe (22) which is led through the base (8) of the grey water container (1) and which projects into the grey water container.

5. Treatment apparatus according to one of Claims 1 to 4,
**characterized in that**
the grey water container (1) has between the inlet region (13) and the outlet region (18) side walls which are arranged parallel to one another, wherein the at least one slide (4, 14, 15) is of plate-like form and is arranged perpendicular to the side walls.

6. Treatment apparatus according to Claim 5,
**characterized in that**
the side walls have guides (25) for guiding the at least one slide (4, 14, 15).

7. Treatment apparatus according to one of Claims 1 to 6,
**characterized in that**
the at least one slide (4, 14, 15) has on a surface facing a fixed gate (6, 16, 17) an elastic lip (7) which is designed such that, in the lowered state of the slide (4, 14, 15), it opens up a gap between the slide (4, 14, 15) and the gate (6, 16, 17) and, in the raised state of the slide (4, 14, 15), it closes off a gap between the slide (4, 14, 15) and the gate (6, 16, 17) and, during a movement of the slide (4, 14, 15) from the lowered position into the raised position, it scrapes off adhesions on that surface of the gate (6, 16, 17) which faces the slide (4, 14, 15).

8. Treatment apparatus according to Claim 7,
**characterized in that**
the gate (6, 16, 17) has a fixed scraper which faces the slide (4, 14, 15) and which is designed such that, during a movement of the slide (4, 14, 15) from the raised position into the lowered position, it elastically deforms the elastic lip (7) of the slide (4, 14, 15) and thus scrapes off adhesions on the lip (7) and, in the lowered state of the slide (4, 14, 15), it opens up a gap between the slide (4, 14, 15) and the gate (6, 16, 17).

9. Treatment apparatus according to one of Claims 1 to 8,
**characterized in that**
the grey water inflow (2) is directed against a jet breaker (10) which is arranged in the grey water container (1) and which is aligned with respect to the grey water inflow (2) such that a jet of grey water exiting through the grey water inflow (2) into the grey water container (1) is fanned out, wherein the jet breaker (10) is arranged with respect to an overflow (23) such that it shields the overflow (23) in the direction of the grey water inflow (2).

10. Treatment apparatus according to one of Claims 1 to 9,
**characterized in that**
a fixed gate (6, 16, 17) facing the inlet region (13) has a guide metal sheet (26) which is arranged with respect to a gap (9) between the gate (6, 16, 17) and a slide (4, 14, 15) associated with the gate such that it shields the gap (9) in the direction of the grey water inflow (2).

11. Treatment apparatus according to one of Claims 1 to 10,
**characterized in that**
the gate filter has at least three movable slides (4, 14, 15).

12. Treatment apparatus according to one of Claims 1 to 11,
**characterized in that**
it has a fill level sensor (11) in the outlet region.

13. Rail vehicle having at least one treatment apparatus for grey water according to one of Claims 1 to 12.

14. Rail vehicle according to Claim 13,
**characterized in that**
it comprises:
- at least one fresh water tank (30),
- at least one fresh water discharge point, and
- a fresh water supply line between the at least one fresh water tank (30) and the at least one fresh water discharge point,
- a fresh water supply line (32) between the at least one fresh water tank (30) and the fresh water inflow (12) for the supply of fresh water in the outlet region (18) of the grey water container (1),
- at least one grey water feed point (36),
- the at least one treatment apparatus for grey water,
- at least one discharge point (38) for treated grey water,
- a grey water supply line (37) between the at least one grey water feed point (36) and the grey water inflow (2) in the inlet region (13) of the grey water container (1) of the treatment apparatus for grey water, and
- a supply line (39) for processed grey water between the outflow (3) for treated grey water in the outlet region (18) of the grey water container (1) of the treatment apparatus for grey water and the at least one discharge point (38) for treated grey water.

15. Rail vehicle according to either of Claims 13 and 14,
**characterized in that**
the at least one discharge point for treated grey water is free of a supply line of fresh water from the at least one fresh water tank (30).

## Revendications

1. Dispositif de traitement d'eaux grises pour un véhicule ferroviaire, comprenant un récipient (1) à eaux grises, une arrivée (2) d'eaux grises dans une région (13) d'entrée, une évacuation (3) d'eaux grises traitées dans une région (18) de sortie et un filtre (19) à coulisse entre la région d'entrée et la région de sortie, qui a au moins un tiroir (4, 14, 15) mobile touchant, dans une position abaissée, le fond (8) du récipient (1) à eaux grises et en étant soulevé, dans une position soulevée, le fond (8) du récipient (1) à eaux grises étant montant de la région (13) d'entrée à la région (18) de sortie, un déchargeoir (5) de nettoyage étant disposé du côté du fond dans la région (13) d'entrée et une arrivée d'eau fraîche étant prévue pour l'apport d'eau fraîche,
**caractérisé en ce que**
l'arrivée (12) d'eau fraîche est disposée dans la région (18) de sortie.

2. Dispositif de traitement suivant la revendication 1,
**caractérisé en ce que**
l'arrivée (12) d'eau fraîche est dirigée sur une paroi du récipient (20) à eaux grises ou sur un briseur de jet monté dans le récipient (1) à eaux grises et dirigé vers l'arrivée (12) d'eau fraîche, de manière à ce qu'un jet d'eau fraîche sortant par l'arrivée (12) d'eau fraîche par le récipient (1) à eaux grises soit mis en éventail.

3. Dispositif de traitement suivant l'une des revendications 1 ou 2,
**caractérisé en ce que**
une ouverture (21) de l'évacuation (3) est, pour le passage de l'eau grise traitée par l'évacuation (3), disposée à distance du fond (8) du récipient (1) à eaux grises.

4. Dispositif de traitement suivant la revendication 3,
**caractérisé en ce que**
l'évacuation (3) a un tuyau (22), qui passe à travers le fond (8) du récipient (1) à eaux grises et qui pénètre dans le récipient à eaux grises.

5. Dispositif de traitement suivant l'une des revendications 1 à 4,
**caractérisé en ce que**
le récipient (1) à eaux grises a, entre la région (13) d'entrée et la région (18) de sortie, des parois latérales, qui sont parallèles entre elles, le au moins un tiroir (4, 14, 15) étant constitué en forme de plaque et étant disposé perpendiculairement aux parois latérales.

6. Dispositif de traitement suivant la revendication 5,
**caractérisé en ce que**
les parois latérales ont des guidages (25) pour guider le au moins un tiroir (4, 14, 15).

7. Dispositif de traitement suivant l'une des revendications 1 à 6,
**caractérisé en ce que**
le au moins un tiroir (4, 14, 15) a, sur une surface tournée vers une coulisse (6, 16, 17) fixe, une lèvre (7) élastique constituée pour dégager, lorsque le tiroir (4, 14, 15) est abaissé, un intervalle entre le tiroir (4, 14, 15) et la coulisse (6, 16, 17) et pour fermer, lorsque le tiroir (4, 14, 15) est soulevé, un intervalle entre le tiroir (4, 14, 15) et la coulisse (6, 16, 17) et pour enlever des adhérences à la surface, tournée vers le tiroir (4, 14, 15), de la coulisse (6, 16, 17), lorsque le tiroir (4, 14, 15) passe de la position abaissée à la position soulevée.

8. Dispositif de traitement suivant la revendication 7,
**caractérisé en ce que**
la coulisse (6, 16, 17) a une racle fixe, qui est tournée vers le tiroir (4, 14, 15) et qui est constituée pour déformer élastiquement la lèvre (7) élastique du tiroir (4, 14, 15) lorsque le tiroir (4, 14, 15) passe de la position soulevée à la position abaissée, et enlever ainsi des adhérences sur la lèvre (7) et pour, lorsque le tiroir (4, 14, 15) est abaissé, dégager un intervalle entre le tiroir (4, 14, 15) et la coulisse (6, 16, 17).

9. Dispositif de traitement suivant l'une des revendications 1 à 8,
**caractérisé en ce que**
l'arrivée (2) d'eaux grises est dirigée sur un briseur (10) de jet disposé sur le récipient (1) à eaux grises et dirigée sur l'arrivée (2) d'eaux grises, de manière à mettre en éventail un jet d'eaux grises sortant dans le récipient (1) à eaux grises par l'arrivée (2) d'eaux grises, le briseur (10) de jet étant disposé par rapport à un trop-plein (23), de manière à protéger le trop-plein (23) dans la direction de l'arrivée (2) d'eaux grises.

10. Dispositif de traitement suivant l'une des revendications 1 à 9,
**caractérisé en ce que**
une coulisse (6, 16, 17) fixe tournée vers la région (13) d'entrée a une chicane (26), qui est disposée par rapport à un intervalle (9) entre la coulisse (6, 16, 17) et un tiroir (4, 14, 15) associé à la coulisse, de sorte qu'elle protège l'intervalle (9) dans la direction de l'arrivée (2) d'eaux grises.

11. Dispositif de traitement suivant l'une des revendications 1 à 10,
**caractérisé en ce que**
le filtre à coulisse comporte au moins trois tiroirs (4, 14, 15) mobiles.

12. Dispositif de traitement suivant l'une des revendications 1 à 11,
**caractérisé en ce que**
il a un capteur (11) de niveau plein dans la région de sortie.

13. Véhicule ferroviaire ayant au moins un dispositif de traitement d'eaux grises suivant l'une des revendications 1 à 12.

14. Véhicule ferroviaire suivant la revendication 13,
**caractérisé en ce que**
il comporte :
- au moins un réservoir (30) d'eau fraîche,
- au moins un point de fourniture d'eau fraîche et
- un conduit d'eau fraîche entre le au moins un réservoir (30) d'eau fraîche et le au moins un point de fourniture d'eau fraîche,
- un conduit (32) d'eau fraîche entre le au moins un réservoir (30) d'eau fraîche et l'arrivée (12) d'eau fraîche pour apporter de l'eau fraîche dans la région (18) de sortie du récipient (1) à eaux grises,
- au moins un point (36) de récupération d'eaux grises,
- le au moins un dispositif de traitement des eaux grises,
- au moins un point (38) de fourniture de l'eau grise traitée,
- un conduit (37) d'eaux grises entre le au moins un point (36) d'entrée d'eaux grises et l'arrivée (2) d'eaux grises dans la région (13) d'entrée du récipient (1) à eaux grises du dispositif de traitement pour l'eau grise et
- un conduit (39) d'amenée pour l'eau grise traitée entre l'évacuation (3) pour de l'eau grise traitée dans la région (18) de sortie du récipient (1) à eaux grises du dispositif de traitement pour les eaux grises et le au moins un point (38) de fourniture pour l'eau grise traitée.

15. Véhicule ferroviaire suivant l'une des revendications 13 ou 14,
**caractérisé en ce que**
le au moins un point de fourniture pour de l'eau grise traitée est exempt d'un conduit d'arrivée d'eau fraîche provenant du au moins un réservoir (30) d'eau fraîche.
